Europäisches Patentamt

European Patent Office

Office européen des brevets

(11) Publication number: **0 180 077 B1**

## EUROPEAN PATENT SPECIFICATION

(45) Date of publication of patent specification: **17.06.92**  (51) Int. Cl.⁵: **G06F 9/44**

(21) Application number: **85112899.1**

(22) Date of filing: **11.10.85**

(54) **A data processing machine for compiling computer programs.**

<table>
<tr><td>

(30) Priority: **31.10.84 US 666800**

(43) Date of publication of application:
**07.05.86 Bulletin 86/19**

(45) Publication of the grant of the patent:
**17.06.92 Bulletin 92/25**

(84) Designated Contracting States:
**DE FR GB**

(56) References cited:

**W.M. WAITE & G. GOOS: "Compiler Construction", 1984, pages 342-353, Springer-Verlag, New York, US**

**COMMUNICATIONS OF THE ACM, vol. 19, no. 3, March 1976, pages 137-146, Association for Computing Machinery, Inc.; F.E. ALLEN et al.: "A program data flow analysis procedure"**

</td><td>

(73) Proprietor: **International Business Machines Corporation**
**Old Orchard Road**
**Armonk, N.Y. 10504(US)**

(72) Inventor: **Hopkins, Martin Edward**
**300 Douglas Road**
**Chappaqua New York 10514(US)**
Inventor: **Warren, Henry Stanley, Jr.**
**Kitchawan Road**
**Ossining New York 10562(US)**

(74) Representative: **Johansson, Lars E.**
**IBM Svenska AB Intellectual Property Department 4-01**
**S-163 92 Stockholm(SE)**

</td></tr>
</table>

Rank Xerox (UK) Business Services

## Description

This invention relates to data processing machines that are used to compile computer programs and produce object code from a source code input.

This invention has particular utility in a compiler for a digital computer in which optimization algorithms are used to improve the quality of the code. It could also be used in an assembler, although optimizing assemblers are not common. This invention improves the quality of the object code generated by the compiler or assembler.

The invention is applicable to computers that use an accumulator or a set of general registers, and that have one or more instruction types that exist in two or more forms, with the forms differing in the length of the operands. Furthermore, for this invention to be applicable there must be some reason to prefer a shorter form on an instruction, when it can be used. On many machines, the shorter forms are preferable because they execute faster, or they occupy less storage, or both.

The quality of code produced by compilers has been an issue ever since the first compiler was produced. One of the principal objectives of IBM's FORTRAN I compiler, the first commercially available compiler, was to produce object code in the field of scientific computations which was comparable in code quality to that produced directly by assembly language programmers coding "by hand".

Today, higher level languages are designed to be used in every field in which computers are applicable. Even the original FORTRAN language has been bolstered to make it applicable to a wide range of programming tasks. However, it is still important that the quality of code produced by the compiler be high, especially if the resultant code is to be used in a production environment. Code produced by a skilled assembly language programmer is still the yardstick against which compiler produced code is measured.

A large number of optimization technique have been developed and refined since the 1950's to improve the quality of compiler generated code. Indeed, many of these optimizations where known in principle, and used in some fashion by the team that produced the first FORTRAN compiler.

Optimizations that are frequently employed in optimizing compilers can be divided into two classes, which are commonly known as "global" and "peephole" optimizations. Global optimizations are those that are based on an analysis of the entire program being complied. Examples are "code motion" (moving code out of loops) and "common subexpressions elimination." Peephole optimizations are those that are based on an analysis of a relatively small region of the program, such as a "basic block", or perhaps only two adjacent instructions.

The present invention can be implemented as a global optimization, or at the basic block level, or it can use partial global information that is normally readily available from global analysis, and then refine this information at the basic block level. With more information available, it is more effective. The information from global analysis that it can profitably use is that of live/dead information. This information tells, for each register operand of an instruction, whether or not that register can be used again before it is reloaded with a new quantity.

If a register operand of an instruction is "dead", that means that the instruction is the "last use" of the register, and after executing the instruction the contents of the register could be altered in any way without affecting the execution of the program. If a register operand of an instruction is "live", on the other hand, that means that the contents of the register cannot be altered after execution of the instruction, because there may be an execution path in which the register's contents are used again.

The following references discuss live variable analysis:

J D Ullman, A Survey of Data Flow Analysis Techniques, Second USA-Japan Computer Conference Proceedings, AFIPS Press, Montvale, New Jersey, (1975), pp 335-342 (contains 37 references).

A V Aho and J D Ullman, Principles of Compiler Design, Addison-Wesley, (1977).

M S Hecht, Flow Analysis of Computer Programs, Elsevier North-Holland, New York, (1977).

The Motorola MC68000 is an example of a type of computer to which this invention is applicable. This computer has three forms of "add", and three forms of "add immediate," as illustrated below.

```
ADD.L r1,r2        ADDI.L #123,r1

ADD.W r1,r2        ADDI.W #123,r1

ADD.B r1,r2        ADDI.B #123,r1
```

ADD.L (add long) adds the entire 32-bit contents of register r1 to register r2, and places the result in r2.

ADD.W (add word) adds the rightmost 16 bits of r1 to the rightmost 16 bits of r2, leaving the leftmost 16 bits of r2 unchanged. ADD.B (add byte) adds the rightmost eight bits of r1 to the rightmost eight bits of r2, leaving the leftmost 24 bits of r2 unchanged. Similarly, ADDI.L (add immediate long) adds a number (123 is shown) to the entire 32-bit contents of register r1, ADDI.W adds to the rightmost 16 bits, and ADDI.B adds to the rightmost eight bits.

The instructions ADD.W and ADD.B execute faster than ADD.L, and hence are preferred in a situation in which either would do. The instructions ADDI.W and ADDI.B execute faster and occupy less storage than ADDI.L, and hence are preferred to ADDI.L.

There is however a particular problem which may limit the replaceable classes of instruction (the problem does not arise in the context of the example architectures and compiler), namely that a replacement may cause condition or status codes to be set differently. For example an 8-bit add may set the carry bit out of bit 8, whereas the 32-bit add sets it out of bit 32, thereby making a replacement unsafe.

The Motorola MC68000 has many other instruction types that exist in "long" and "short" forms, with the shorter form being faster in execution and often occupying less storage. Further details, including instruction timings, may be found in:

MC68000 16-bit Microprocessor User's Manual, Second edition, Motorola, Inc., (January 1980).

The invention is defined in the appended claims.

As an example of the code improvement accomplished by this invention, suppose a compiler has generated the instruction sequence:

```
ADD.L      R2,R1

SUBI/L     #16,r1

MOVE.W     r1,6(r5)
```

and suppose further that the MOVE.W instruction, which stores the rightmost 16 bits of register r1 into storage at a location addressed by the contents of register r5 plus 6, is the last use of register r1. Then this invention will replace the ADD.L instruction with ADD.W, and the SUBI.L instruction with SUBI.W. The latter forms execute faster than the former, and the SUBI.W instruction occupies less storage than SUBI.L.

In order that the invention may be fully understood a preferred embodiment thereof will now be described with reference to the accompanying drawings in which:

FIG. 1 is a very high level functional flowchart of an optimizing compiler in which the present invention has particular utility.

FIG. 2 is a high level flowchart of the herein disclosed compiler module for effecting the desired significant bit analysis.

FIG. 3 is a more detailed flowchart illustrating how some of the computational type of instructions are processed by the herein disclosed compiler module.

The invention will be described as if fits into an optimizing compiler, and for the Motorola MC68000 target machine.

The first step in applying this invention is to do "significant bit analysis" of the program being compiled. This is a process of determining, for each instruction, which bits of the result of that instruction are "significant" (it is assumed, for simplicity, that there is only one result). A bit is significant if it is used by the program after being computed. This is the same concept as the well known "liveness," except that each bit of the result is examined to determined whether or not it is "live," or "significant". In conventional liveness analysis, only a single summary bit is computed for each instruction, which indicates whether or not any bits of the result are "live", or "significant".

There are three levels at which significance analysis could be done:

1. Globally, as ordinary liveness analysis is done,

2. On a basic block (actually branch-to-branch) level, with assistance from global liveness analysis, or

3. On a basic block (or branch-to-branch) level with no assistance.

The first choice above is the most expensive to compute but gives the best results. The last is the cheapest to compute but gives the poorest results. The second is a compromise that is only a little more expensive to compute than (3) if liveness analysis has been done anyway, and gives results of intermediate quality. Choice (2) will be described herein, however the invention is not intended to be limited to this particular approach.

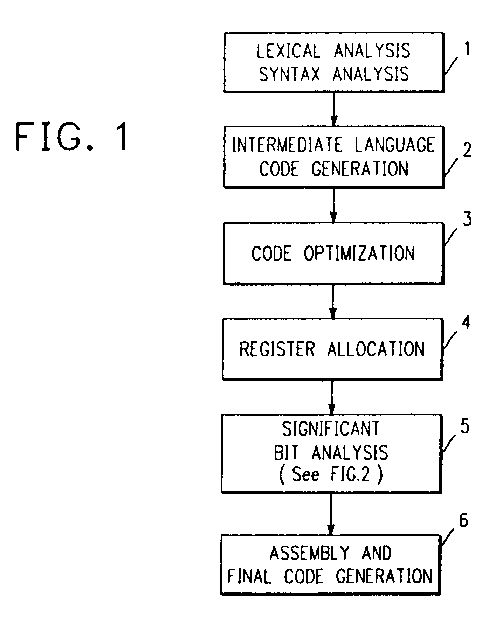

FIG. 1 shows where level (2) of significant bit analysis (block 5) is most conveniently done within the framework of a typical optimizing compiler. The important thing is that global code optimization (block 3) is done before significant bit analysis. This is because conventional liveness analysis is part of global code optimization, and we will need the "last use" bits that are a byproduct of liveness analysis.

It is preferable, although not necessary, that register allocation (block 4) be done before significant bit analysis. This permits a more efficient compiler, because if register allocation is done first, significant bit analysis can be done in terms of the real registers of the machine, and there is usually a fairly small number of them (e.g., 16 on the Motorola MC68000).

Significant bit analysis has to be done before final code generation (block 6). The final code generation module of the compiler will use the results of significant bit analysis to determine what form (8-, 16-, or 32-bit) of each instruction to generate.

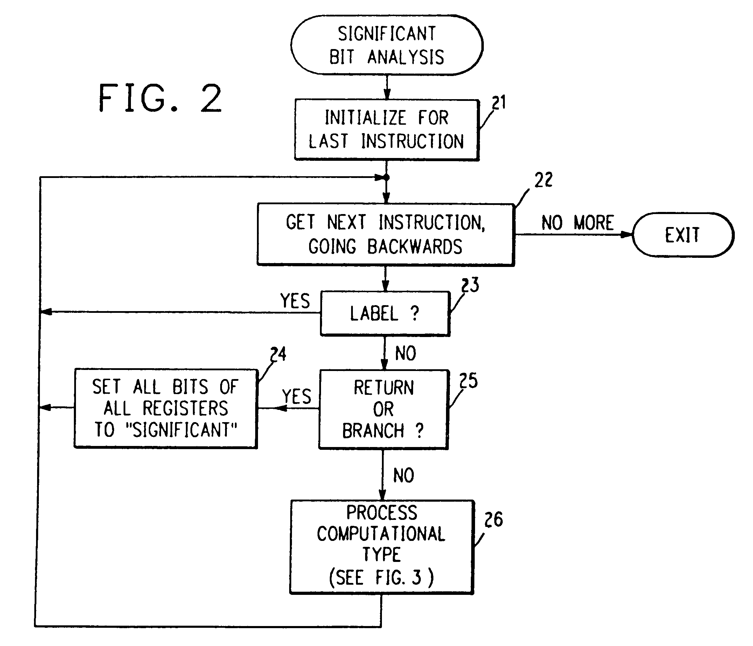

FIG. 2 is a high level flowchart of the significant bit analysis shown in block 5 of FIG. 1. The analysis is done in a single backwards pass over the program. Although the processing shown here could be done on a basic block basis, it is shown being done on a branch-to-branch basis. This is just as easy to program, and it will sometimes result in better quality code being generated. Thus label points in the program are ignored (block 23). However, branch instructions (block 25) result in resetting the machine's knowledge of which bits are significant in each register, to the state "all bits of all registers are presumed to be significant." This is the safe state to assume of those points at which the machine has no information.

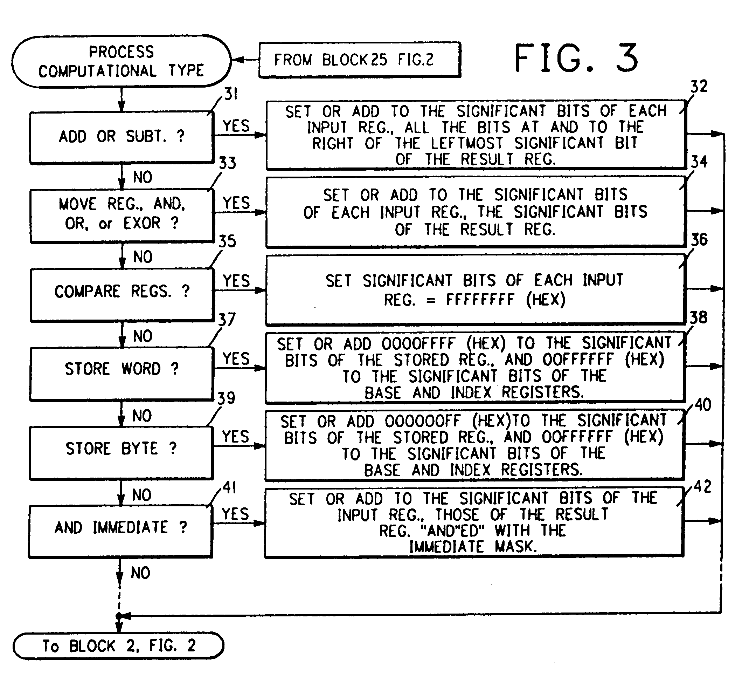

If an instruction is not one that represents a label point, and is not a branch or subroutine "return" instruction, then it is an ordinary computational instruction such as "add," "load," "store," "shift," etc. The processing of computational instructions, shown as block 26 of FIG. 2, is shown in more detail in FIG. 3.

This program works with an array of bits (significance values) referred to herein as the significant bit table (SBT), that has a number of rows equal to the number of registers on the machine (e.g., 16 on the Motorola MC68000), and a number of columns equal to the register length of the machine (32 on the MC68000). At a typical point in processing, the array might look like this:

```
                    32 bits


        0.    0000FFFF      8.    FFFFFFFF

        1.    FFFFFFFF      9.    0000FFFF

        2.    FFFFFFFF     10.    000001FF

        3.    FFFFFFFF     11.    7FFFFFFF

        4.    FFFFFFF0     12.    0F0F0F0F

        5.    000000FF     13.    0000FF00

        6.    FFFFFFFF     14.    FFFFFFFF

        7.    FFFFFFFF     15.    FFFFFFFF
```

Here we have shown the bits in hexadecimal notation, e.g., "0000FFFF", denotes 16 zero-bits followed by 16 one-bits. The values in the array change as the program scans backwards in the instruction stream. If, at a certain point, the array has the values shown above, then the meaning is that at that point, the leftmost 16 bits of register 0 are not significant ("dead"), but the rightmost 16 bits are significant. A significance value of "FFFFFFFF" means that all bits in the associated register are significant, etc.

Now, with reference to FIG. 3, let us see how an instruction is processed to determine the significant bits of its result. The process is to propagate the significant bits from a result to the input operands of an instruction. Then, it is propagated from the input operands of a current instruction to the result operands of earlier instructions, as the program controls the processor to scan backwards through the instruction stream. Just how the bits propagate from a result to the input operands depends on the instruction type (add, shift, store, etc.), as shown in FIG. 3. To get started, the machine must know, or assume, which bits of the result of the first encountered instruction are significant. For the process being described, the first encountered instruction is assumed to have all its result bits significant. This is recorded by initializing the entire 16x32 bit array to all one's when a branch instruction is encountered, i.e. significance values for all registers equal to "FFFFFFFF".

Now, suppose the middle of a branch-to-branch section of code is being currently processed, and an add or substrate or subtract instruction is encountered. In particular, suppose the instruction is:
ADD.L r1,r2

This means to add the contents of register r1 to the contents of register r2. Register r2 is both an input to and the result of the instruction. It will be easier for us to think in terms of a three-address instruction:

ADD.L R1,r2,3

in which r3 is the result register

First it is necessary to refer to the significant bit table at position r3, to see what bits of the result are significant. The bit mask retrieved from the table is associated (stored) with the add instruction, so that it can be used later by the assembly and final code generation module to generate the optimum form of the add instruction. Actually, for efficiency it suffices to associate only two bits with the add instruction, to record whether the instruction should be generated in long (32-bit) form, word (16-bit) form, or byte (8-bit) form, as those are the only choices on the MC68000. This association of two bits with the instruction will be referred to subsequently as "marking" the instruction.

Suppose the significant bits of the result register r3 (as determined for the SBT) are X700008012'. Then we can mark the add instruction as "word," or 16-bit, form, because all significant bits of the result lie in the rightmost 16 bits of register r3. Then, since addition is a right-to-left process (two's complement arithmetic is assumed throughout), the bits in the leftmost 16 positions of registers r1 and r2 cannot possibly affect a significant bit of the result, but bits anywhere in the rightmost 16 positions can. Therefore, the significant bits of registers r1 and r2 for this instruction are X'0000FFFF'. This is next recorded in the SBT table, at the rows for registers r1 and r2. If the add instruction is the last use of r1 (or r2) in that block, then the table position for r1 (or r2) is set to X'0000FFFF'. This is determined by looking at the liveness bit described above which may be set during the "Code Optimization" phase. On the other hand, if the add instruction is not the last use of r1 (or r2), then we "OR" X'0000FFFF' into the table at position r1 (or r2). The point is that r1 and r2 may have certain bits significant because of uses of these registers below the add instruction, e.e., uses that were processed earlier in this backwards scan, and wherein those significant uses must not be "forgotten". This processing of an add (or subtract) instruction is shown in blocks 31 and 32 of FIG. 3.

As the backwards scan proceeds, it will likely come to an instruction that sets r1 to r2. At this point, it refers to the table at position r1 or r2, respectively, to determine which bits of that register are significant. It then propagates this information back to the input operands, in a manner similar to the processing of the add instruction described above.

Suppose as another example that a "store byte" instruction is encountered (FIG. 3 blocks 39 and 40). This instruction would be written:

MOVE.B r1,d(r2,r3)

in which register r1 contains the byte being stored, and r2 and r3 are "base" and "index" registers that serve to address storage. "d" is a displacement (a constant) that has no role in significance analysis. The MOVE instruction has no result register (it doesn't alter the contents of any register). It uses only the rightmost eight bits of register r1. Therefore, a mask of X'000000FF' is OR'ed into the table at the position of r1. The MOVE instruction uses the rightmost 24 bits of the base and index registers, so a mask of X'00FFFFFF' is OR'ed into the table at the positions of r2 and r3.

FIG. 3 shows the processing of six instruction types. The complete process should be expanded to include other instruction types not shown in FIG. 3, such as "load" and "shift" instructions, etc.

To now present a more substantial example, suppose that a sequence of code between branches is:

```
                                          significance of r1

        MOVE.L   4(r2),r1                 0000FF00

        LSR.L    #8,r1                    000000FF

        ANDI.L   X'000000FF',r1           000000FF

        MOVE.B   r1',0(r2)
```

The program reads a long word (32 bits) from memory, shifts it right eight positions (LSR = logical shift right), "AND's" it with the mask X'000000FF', and stores the rightmost byte of register r1 into main memory. The column headed "significance of r1" shows one row of the significance array, that for r1, as processing proceeds backwards. The following will describe what happens to the significance of r1 as this sequence of instructions is processed.

Initially (bottom row), the significance of r1 is set to X'FFFFFFFF', which is what has to be assumed in the absence of any knowledge. Then the MOVE.B instruction is encountered. For this example, assume that the use of r1 in this instruction is flagged as a "last use," which has been denoted with a prime (') after r1. Then the significance of r1 is set to X'000000FF' in the table, following FIG. 3 block 40.

Next the ANDI.L is encountered. This instruction uses r1 as both an input and the result register. The significance of r1 as a result, X'000000FF', is "AND'd" with the mask, also X'000000FF' is "OR'ed" into the table for position r1. The result is X'000000FF' (no change to the significance of r1). These steps are summarized in FIG. 3 block 42.

Now at this point, the significance analysis program could observe that the instruction turns off only insignificant bits, and hence can be omitted. Alternatively, the instruction could be marked as byte form, and final code generation could delete it, since the immediate mask ends in eight "1" bits.

Next the LSR.L is encountered. It is marked as byte form, because the significance of the result is X'000000FF'. The significance of the input register, r1, is the significance of the result register, also r1, shifted left eight positions (handling of shifts is not shown in FIG. 3).

Lastly, the MOVE.L is encountered. This is marked as word (16-bit) form, because the significance of the result register (r1) is X'0000FF00', i.e., only bits in the rightmost 16 positions are significant.

By using the marking computed above, final code generation can output the following instructions as a faster and shorter equivalent to those shown above:

```
MOVE.W    6(r2),r1        (load instruction from memory)

LSR.W     #8,r1

MOVE.B    r1',0(r2)       (store instruction to memory)
```

There are two things that final code generation must be cognizant of that arise in the above example: (1) the MOVE.L cannot be changed to MOVE.W unless the increase of two in the displacement (from 4 to 6 in the example) results in a displacement within the limits allowed by the instruction (32767 for the MC68000), and (2) the selection for the most efficient form of the LSR instruction depends upon the significance value of the result and the shift amount. In the example, the significance value of the result is X'000000FF', but the LSR instruction cannot be made LSR.B, because bits in positions 16-23 of register r1 are shifted into positions 24.31. It can, however, be made LSR.W, which is faster than the original LSR.L.

Appendix I shows a complete working subroutine for performing significance analysis. It includes the steps that were illustrated in FIG. 2 and FIG. 3. It has been utilized successfully with several target machines: the Motorola MC68000, the IBM System/370, and several experimental reduced instruction set machine architectures. It is written in a language similar to PL/I, and is sufficiently annotated to allow any skilled programmer to incorporate the present invention into an optimizing compiler of the form shown in FIG. 2, or to rewrite the subroutine in another language, or for another target machine, or for a compiler to assembly of different structure.

It will of course be appreciated that the specific significance values introduced into the bit table would have to be tailored to a specific system architecture and particular instruction format. The invention would have equal applicability to, for example, a 16 bit full word machine as well as to a 45 to 64 bit machine architecture. It should be noted more particularly, that the advantages of the present invention will be realized in a machine architecture where the shorter form instructions take less machine time or less storage space than the longer form regardless of the underlying and length of the machine.

## Claims

1. A code optimizing method operable within an optimizing compiler after the register allocation phase thereof,

   said method being operable to perform significant bit analysis, the results of said analysis being utilized during the final code generation phase of the compiler operations for generating the most efficient form of computer instruction available for producing the required result, said method comprising,

   establishing a significant bit table in memory being a storage location relating to each working register for target system and means for accessing said table at a location derivable from the register number assignment of the operands of an instruction,

examining a linear code stream which is to be optimized, sequentially in reverse order,

if an instruction being evaluated is a non-computational "label", obtaining the next instruction,

if an instruction is a return or branch instruction, initializing all the significance values, that is the entries in the significant bit table, to "all significant" ("FFFFFFFF"), thereby indicating that the values of any of the bits of any of the registers may be required in determining input operands of instructions later in the execution of the program, and then obtaining the next instruction,

for each computational type instruction :
a) marking said instruction in accordance with the significance value of its corresponding result register to indicate the maximum number of bits in operands and results required to carry out the instruction,
b) using the significance value of said corresponding result register and the details of said instruction to determine which bits of the values contained in which registers are significant in computing the significant bits of the result, and modifying the significant bit table accordingly, and
continuing the evaluation process until all of the instructions in a particular instruction stream have been processed.

2. A method as claimed in claim 1,wherein an 'add' or 'subtract' instruction is obtained and which comprises setting or adding to the significant bits of each input register all the bits at and to the right of the leftmost significant bit of the result register, in said significant bit table.

3. A method as claimed in claim 1 or 2, wherein the computational instruction comprises a "move register" or an "AND, OR, or EXOR" logical operation including;

setting or adding to the significant bits of each input register of the instruction, the significant bits of the result register.

4. A method as claimed in any of claims 1-3, wherein the computational instruction comprises a "compare registers" operation including;

setting the significant bits of each input register as "all significant".

5. A method as claimed in any of claims 1-4, wherein the computational instruction comprises a "store word" operation including;

setting or adding a significance value to the significant bit table at the location relating to the register to be stored equal to the field length of a word in the target system and setting or adding a significance value to the significant bit table at locations related to the base and index registers, a value equal to the field length of the base and index fields required by the target system memory.

6. A method as claimed in any of claims 1-5, wherein the computational instruction comprises a "store byte" operation including;

setting or adding a significance value to the significant bit table at the location relating to the register to be stored equal to the field length of a byte in the target system and setting or adding a significance value to the significant bit table at locations related to the base and index registers, a value equal to the field length of the base and index fields required by the target system memory.

7. A method as claimed in any of claims 1-6, wherein the computational instruction comprises an "AND immediate" instruction including;

setting or adding to the significance value in the significant bit table at the location relating to the register, the significance value of the result of the instruction, 'AND'ed with the "immediate mask".

**Revendications**

1. Procédé d'optimisation de code pouvant opérer dans un compilateur d'optimisation après sa phase d'attribution de registres,

ledit procédé pouvant opérer pour faire une analyse de bits significatifs, les résultats de ladite analyse étant utilisés durant la phase de génération de code finale des opérations du compilateur pour engendrer la forme la plus efficace d'instruction de compilateur disponible pour produire le résultat requis, ledit procédé comprenant:

établir dans la mémoire la table de bits significatifs qui est un emplacement d'emmagasinage rattaché à chaque registre de travail du système cible, et des moyens pour avoir accès à ladite table à un emplacement pouvant être dérivé de l'affectation de numéro de registre des opérandes d'une instruction,

examiner une chaîne de codes linéaire qui doit être optimisée, successivement dans un ordre inverse,

si une instruction évaluée est un label de non-calcul, obtenir l'instruction suivante,

si une instruction est une instruction de retour ou de branchement, initialiser toutes les valeurs significatives, c'est-à-dire, les entrées dans la table de bits significatifs, à "toutes significatives" ("FFFFFFFF"), indiquant de ce fait que les valeurs de l'un quelconque des bits de l'un quelconque des registres peuvent être requises pour la détermination des opérandes d'entrée d'instructions ultérieurement dans l'exécution du programme, et, ensuite, obtenir l'instruction suivante,

pour chaque instruction du type à calcul:

a) marquer ladite instruction conformément à la valeur de signification de son registre de résultat correspondant pour indiquer le nombre maximal de bits dans les opérandes et les résultats requis pour exécuter l'instruction,

b) utiliser la valeur de signification dudit registre de résultat correspondant et les détails de ladite instruction pour déterminer quels bits des valeurs contenues dans quels registres, sont significatifs pour le calcul des bits significatifs du résultat, et modifier la table de bits significatifs en conséquence, et

continuer le processus d'évaluation jusqu'à ce que toutes les instructions d'une suite d'instructions particulière aient été traitées.

2. Procédé selon la revendication 1, dans lequel est obtenue une instruction d'"addition" ou de "soustraction", et qui comprend l'instauration ou l'addition aux bits significatifs de chaque registre d'entrée, de tous les bits au bit significatif d'extrême gauche, et sur la droite de celui-ci, du registre de résultat, dans ladite table de bits significatifs.

3. Procédé selon les revendications 1 ou 2, dans lequel l'instruction de calcul comprend un "déplacement du registre" ou une opération ET, OU, ou OU exclusif comprenant:

L'instauration ou l'addition aux bits significatifs de chaque registre d'entrée de l'instruction, des bits significatifs du registre de résultat.

4. Procédé selon l'une quelconque des revendications 1-3, dans lequel l'instruction de calcul comprend une opération de "comparaison de registres" comprenant:

l'instauration de tous les bits significatifs de chaque registre d'entrée comme "tous significatifs".

5. Procédé selon l'une quelconque des revendications 1 à 4, dans lequel l'instruction de calcul comporte une opération d "emmagasinage de mot" comprenant:

l'instauration ou l'addition d'une valeur de signification à la table de bits significatifs à l'emplacement rattaché au registre à emmagasiner, égale à la longueur de champ d'un mot dans le système cible, et l'instauration ou l'addition d'une valeur de signification à la table de bits significatifs aux emplacements associés aux registres de base et d'index, valeur égale à la longueur de champ des champs de base et d'index requis par la mémoire du système cible.

6. Procédé selon l'une quelconque des revendications 1 à 5, dans lequel l'instruction de calcul comporte une opération d'"emmagasinage de multiplet" comprenant:

l'instauration ou l'addition d'une valeur de signification à la table de bits significatifs à l'emplacement rattaché au registre à emmagasiner, égale à la longueur de champ d'un multiplet dans le système cible, et l'instauration ou l'addition d'une valeur de signification à la table de bits significatifs aux emplacement associés aux registres de base et d'index, valeur égale à la longueur de champ des champs de base et d'index requis par la mémoire du système cible.

**7.** Procédé selon l'une quelconque des revendications 1 à 6, dans lequel l'instruction de calcul comporte une instruction de "ET immédiat" comprenant:

L'instauration ou l'addition à la valeur de signification dans la table de bits significatifs rattachée au registre, de la valeur significative du résultat de l'instruction, soumise à une condition "ET" avec le "masque immédiat".

## Patentansprüche

**1.** Verfahren zum Optimieren eines Codes, das nach der Registerzuordnungsphase eines optimierenden Compilers innerhalb desselben durchgeführt werden kann,

wobei das Verfahren durchgeführt werden kann, um eine Analyse für signifikante Bits zu liefern, die Ergebnisse der Analyse während der Phase einer Endcodeerzeugung der Compilerarbeitsgänge verwendet werden, um die leistungsfähigste Form eines Rechnerbefehls zu bilden, der zum Erzeugen des gewünschten Ergebnisses verfügbar ist, und das Verfahren folgendes umfaßt:

Festlegen einer Tabelle für signifikante Bits in einem Speicher, die eine Speicherstelle mit Bezug auf jedes Arbeitsregister für ein Zielsystem ist, und von Mitteln zum Zugreifen auf die Tabelle bei einer Stelle, die aus der Registernummerzuweisung der Operanden eines Befehls erhalten werden kann,

Prüfen eines Stroms mit linearem Code, der optimiert werden soll aufeinanderfolgend in umgekehrter Reihenfolge,

falls ein ausgewerteter Befehl keine Rechen-"Marke" ist, Erhalten des nächsten Befehls,

falls ein Befehl ein Rücksprung- oder ein Sprungbefehl ist, Initialisieren aller Signifikanzwerte, welche die Eintragungen in der Tabelle für signifikante Bits sind, auf "alle signifikant" ("FFFFFFFF"), wodurch angezeigt wird, daß die Werte irgendeines der Bits irgendeines der Register beim Bestimmen von Eingangsoperanden von Befehlen später in der Ausführung des Programms erforderlich sein können und sodann Erhalten des nächsten Befehls,

für jeden Befehl der Rechenart:
a) Markieren des Befehls entsprechend dem Signifikanzwert seines entsprechenden Ergebnisregisters, um die maximale Anzahl von Bits in Operanden und Ergebnissen anzuzeigen, die zum Ausführen des Befehls erforderlich sind,
b) Verwenden des Signifikanzwerts des entsprechenden Ergebnisregisters und der Einzelheiten des Befehls, um zu bestimmen, welche Bits der enthaltenen Werte in welchen Registern beim Berechnen der signifikanten Bits des Ergebnisses signifikant sind und entsprechendes Ändern der Tabelle für signifikante Bits und
Fortsetzen des Auswerteverfahrens solange, bis alle Befehle in einem speziellen Befehlsstrom verarbeitet wurden.

**2.** Verfahren nach Anspruch 1, bei welchem ein "Addition"- oder "Subtraktion"-Befehl erhalten wird und welches das Setzen aller Bits bei dem höchstwertigen signifikanten Bit des Ergebnisregisters und rechts desselben oder das Addieren derselben zu den signifikanten Bits jedes Eingangsregisters in der Tabelle für signifikante Bits umfaßt.

**3.** Verfahren nach Anspruch 1 oder 2, bei welchem der Rechenbefehl ein "Bewegen eines Registers"- oder einen "AND, OR oder EXOR"-logischen Arbeitsgang enthält, einschließlich

des Setzens der signifikanten Bits des Ergebnisregisters oder des Addierens derselben zu den signifikanten Bits jedes Eingangsregisters des Befehls.

**4.** Verfahren nach einem der Ansprüche 1 bis 3, bei welchem der Rechenbefehl einen "Vergleichen von Registern"-Arbeitsgang enthält, einschließlich:

des Setzens der signifikanten Bits jedes Eingangsregisters als "alle signifikant".

5. Verfahren nach irgendeinem der Ansprüche 1 bis 4, bei welchem der Rechenbefehl einen "Speichern eines Wortes"-Arbeitsgang enthält, einschließlich:

des Setzens oder Addierens eines Signifikanzwertes zu der Tabelle für signifikante Bits bei der Stelle mit Bezug auf das Register, das gespeichert werden soll, der gleich ist der Feldlänge eines Wortes in dem Zielsystem und des Setzens oder Addierens eines Signifikanzwertes zu der Tabelle für signifikante Bits bei Stellen mit Bezug auf die Basis- und Indexregister, eines Wertes, der gleich ist der Feldlänge der Basis- und Indexfelder, die von dem Zielsystemspeicher erforderlich sind.

6. Verfahren nach irgendeinem der Ansprüche 1 bis 5, bei welchem der Rechenbefehl einen "Speichern eines Bytes" - Arbeitsgang enthält, einschließlich

des Setzens oder Addierens eines Signifikanzwertes zu der Tabelle für signifikante Bits bei der Stelle mit Bezug auf das Register, das gespeichert werden soll, der gleich ist der Feldlänge eines Bytes in dem Zielsystem und des Setzens oder Addierens eines Signifikanzwertes zu der Tabelle für signifikante Bits bei Stellen mit Bezug auf die Basis- und Indexregister, eines Wertes, der gleich ist der Feldlänge der Basis- und Indexfelder, die von dem Zielsystemspeicher erforderlich sind.

7. Verfahren nach irgendeinem der Ansprüche 1 bis 6, bei welchem der Rechenbefehl einen "AND-unmittelbar" Befehl enthält, einschließlich:

des Setzens des Signifikanzwertes des Ergebnisses des Befehls, der einer "AND"-Bildung mit der "unmittelbare Maske" unterworfen wurde und des Addierens desselben zu dem Signifikanzwert in der Tabelle für signifikante Bits bei der Stelle mit Bezug auf das Register.

FIG. 1

```
┌─────────────────────────┐
│   LEXICAL  ANALYSIS     │  1
│   SYNTAX  ANALYSIS      │
└─────────────────────────┘
            │
            ▼
┌─────────────────────────┐
│  INTERMEDIATE LANGUAGE  │  2
│    CODE  GENERATION     │
└─────────────────────────┘
            │
            ▼
┌─────────────────────────┐
│    CODE  OPTIMIZATION   │  3
└─────────────────────────┘
            │
            ▼
┌─────────────────────────┐
│   REGISTER  ALLOCATION  │  4
└─────────────────────────┘
            │
            ▼
┌─────────────────────────┐
│      SIGNIFICANT        │  5
│      BIT  ANALYSIS      │
│     ( See FIG.2 )       │
└─────────────────────────┘
            │
            ▼
┌─────────────────────────┐
│     ASSEMBLY  AND       │  6
│  FINAL  CODE  GENERATION│
└─────────────────────────┘
```

## FIG. 2

```
              ┌─────────────────┐
              │   SIGNIFICANT   │
              │  BIT ANALYSIS   │
              └────────┬────────┘
                       │
              ┌────────▼────────┐
              │  INITIALIZE FOR │ ⟍21
              │ LAST INSTRUCTION│
              └────────┬────────┘
                       │
              ┌────────▼──────────────┐          ┌──────┐
      ┌──────▶│ GET NEXT INSTRUCTION, │─NO MORE─▶│ EXIT │
      │       │   GOING BACKWARDS     │ ⟍22      └──────┘
      │       └────────┬──────────────┘
      │                │
      │       ┌────────▼────────┐
      │ ◀─YES─│    LABEL ?      │ ⟍23
      │       └────────┬────────┘
      │                │ NO
      │  ┌──────────────┐     ┌──────────────┐
      │ ◀│ SET ALL BITS │◀YES─│   RETURN     │ ⟍25
      │  │ OF ALL       │     │     OR       │
      │  │ REGISTERS    │⟍24  │   BRANCH ?   │
      │  │ TO           │     └──────┬───────┘
      │  │ "SIGNIFICANT"│            │ NO
      │  └──────────────┘     ┌──────▼───────┐
      │                       │   PROCESS    │
      │                       │ COMPUTATIONAL│ ⟍26
      │                       │    TYPE      │
      │                       │ (SEE FIG. 3) │
      │                       └──────┬───────┘
      └──────────────────────────────┘
```

EP 0 180 077 B1

# FIG. 3

FROM BLOCK 25 FIG.2

↓

PROCESS COMPUTATIONAL TYPE

→ **31** ADD OR SUBT. ? —YES→ **32** SET OR ADD TO THE SIGNIFICANT BITS OF EACH INPUT REG., ALL THE BITS AT AND TO THE RIGHT OF THE LEFTMOST SIGNIFICANT BIT OF THE RESULT REG.

NO ↓

**33** MOVE REG., AND, OR, or EXOR ? —YES→ **34** SET OR ADD TO THE SIGNIFICANT BITS OF EACH INPUT REG., THE SIGNIFICANT BITS OF THE RESULT REG.

NO ↓

**35** COMPARE REGS. ? —YES→ **36** SET SIGNIFICANT BITS OF EACH INPUT REG. = FFFFFFF (HEX)

NO ↓

**37** STORE WORD ? —YES→ **38** SET OR ADD 0000FFFF (HEX) TO THE SIGNIFICANT BITS OF THE STORED REG., AND 00FFFFFF (HEX) TO THE SIGNIFICANT BITS OF THE BASE AND INDEX REGISTERS.

NO ↓

**39** STORE BYTE ? —YES→ **40** SET OR ADD 000000FF (HEX) TO THE SIGNIFICANT BITS OF THE STORED REG., AND 00FFFFFF (HEX) TO THE SIGNIFICANT BITS OF THE BASE AND INDEX REGISTERS.

NO ↓

**41** AND IMMEDIATE ? —YES→ **42** SET OR ADD TO THE SIGNIFICANT BITS OF THE INPUT REG., THOSE OF THE RESULT REG. "AND"ED" WITH THE IMMEDIATE MASK.

NO ↓

To BLOCK 2, FIG. 2

13